# EUROPÄISCHE PATENTSCHRIFT

(11) **EP 1 382 105 B1**
(45) Veröffentlichungstag und Bekanntmachung des Hinweises auf die Patenterteilung: **01.08.2018**
(21) Anmeldenummer: 02732394.8
(22) Anmeldetag: 13.04.2002
(51) Int. Cl.: H02J 7/14, H02M 7/06

(54) **DIODENANORDNUNG MIT ZENERDIODEN UND GENERATOR**
DIODE ARRANGEMENT COMPRISING ZENER DIODES AND A GENERATOR
SYSTEME DE DIODES COMPORTANT DES DIODES ZENER ET GENERATEUR

(30) Priorität: 17.04.2001 DE 10118846
(43) Veröffentlichungstag der Anmeldung: 21.01.2004
(73) Patentinhaber: ROBERT BOSCH GMBH, 70442 Stuttgart (DE)
(72) Erfinder: SPITZ, Richard, 72766 Reutlingen (DE); TOPP, Rainer, 72768 Reutlingen (DE); GOERLACH, Alfred, 72127 Kusterdingen (DE); HAUSMANN, Holger, 72555 Metzingen (DE)
(86) Internationale Anmeldenummer: PCT/DE2002/001387
(87) Internationale Veröffentlichungsnummer: WO 2002/084840

(56) Entgegenhaltungen:
- US-A- 5 719 488
- PATENT ABSTRACTS OF JAPAN vol. 016, no. 316 (E-1231), 10. Juli 1992 (1992-07-10) & JP 04 088843 A (HITACHI LTD), 23. März 1992 (1992-03-23)

## Beschreibung

### Stand der Technik

In 14-V-Kfz-Bordnetzen werden in der Regel Drehstrom-Klauenpolgeneratoren mit passiver Gleichrichterbrücke zur Stromerzeugung eingesetzt. Bei plötzlichem Abfall von Verbrauchern (= Loaddump), was beispielsweise durch ein schnelles Abschalten eines großen Laststroms hervorgerufen wird, tritt am Ausgang des Generators aufgrund einer verzögerten Reaktion der Generatorausgangsspannungsregelung eine hohe freilaufende Spannung auf. Um Schäden durch Überspannung in den Bordnetzsystemen zu vermeiden, muss diese Überspannung begrenzt werden. Hierfür werden im allgemeinen Gleichrichter Zenerdioden eingesetzt, was eine sehr kostengünstige Lösung dieses Problems darstellt. Die Gleichrichterdioden bzw. Zenerdioden werden im Normalbetrieb zur Gleichrichtung der Phasenwechselspannung, die vom Generator erzeugt wird, eingesetzt. Hierbei werden die Zenerdioden in Vorwärtsrichtung betrieben und haben einen Stromfluss von der Anode zur Kathode.

In 14-V-Bordnetzen erfüllen die Gleichrichter-Zenerdioden bestimmte Toleranzbedingungen, wobei die Maximalspannung, die dem Bordnetz ausgehend vom Generator in Grenzfällen zugemutet wird, etwa beim Doppelten und darüber der Normalspannung des Bordnetzes liegt. Für Bordnetze mit einer höheren Versorgungsspannung können diese Verhältnisse nicht ohne Weiteres übertragen werden, weil das Doppelte einer solchen höheren Versorgungsspannung eine so hohe Spannung darstellen würde, dass weitergehende Schutzmaßnahmen erforderlich wären.

In der US 5719488 wird eine Diodenanordnung zur Verwendung in einem Generator in einem Gleichspannungsnetz beschrieben, bei der zwei unterschiedliche Schutzmechanismen vorgesehen sind. Ein Schutzmechanismus besteht in der Schaltspannung VB des Reglers und ein zweiter in der Verwendung von Dioden die auch im Zenerdurchbruch betrieben werden können. Dabei ist die Zenerspannung VZ deutlicher höher gewählt als die Spannungen die beim Betrieb des Generators auftreten.

### Vorteile der Erfindung

Der erfindungsgemäße Generator hat demgegenüber den Vorteil, dass auch für den Fall einer höheren Versorgungsspannung für ein Gleichstromnetz ein Überlastschutz für das Bordnetz gewährleistet ist, wobei Zenerdioden als Gleichrichterdioden einsetzbar sind, die günstig beschaffbar sind. Die Erfindung betrifft einen Generator gemäss Anspruch 1. Durch die in den Unteransprüchen aufgeführten Maßnahmen sind vorteilhafte Weiterbildungen und Verbesserungen des in den nebengeordneten Ansprüchen angegebenen Generators angegeben.

### Zeichnung

Ein Ausführungsbeispiel der Erfindung ist in der Zeichnung dargestellt und in der nachfolgenden Beschreibung näher erläutert. Es zeigen:
- Figur 1: einen Generator mit Gleichrichter und angeschlossenem Gleichstromnetz,
- Figur 2: eine erfindungsgemäße Gleichrichteranordnung und
- Figur 3: ein Beispiel für den erfindungsgemäßen Toleranzbereich für erfindungsgemäße Gleichrichterdioden.

### Beschreibung des Ausführungsbeispiels

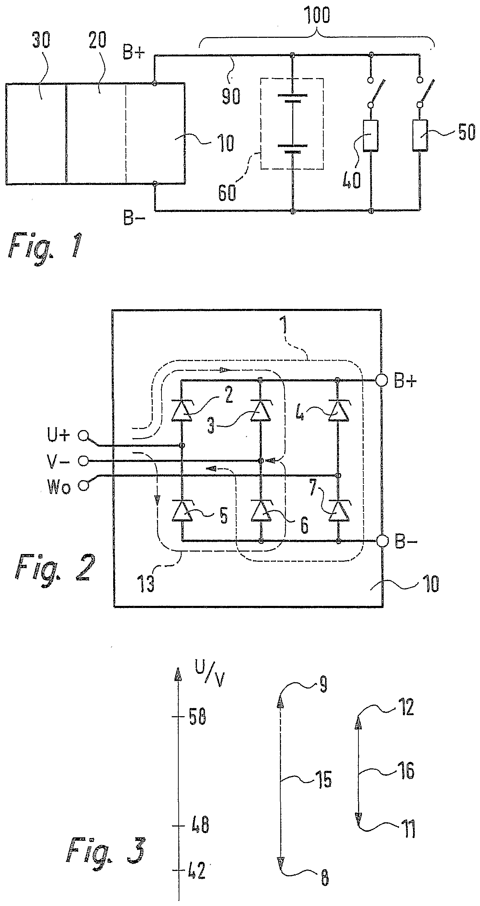

In Figur 1 ist ein Generator 20 mit einer Gleichrichteranordnung 10 dargestellt. Weiterhin ist eine Regelungseinrichtung 30 für den Generator 20 dargestellt, die mit dem Generator 20 verbunden ist. Die Gleichrichteranordnung 10 ist derart mit dem Generator 20 verbunden, dass die Ausgänge des Generators 20 (in Figur 1 nicht dargestellt), die die vom Generator 20 gelieferte Wechselspannung tragen, den Wechselspannungsanschlüssen (ebenfalls in Figur 1 nicht dargestellt) der Gleichrichteranordnung 10 entsprechen. Die Gleichrichteranordnung 10 umfasst zwei Gleichspannungsanschlüsse, einen ersten Gleichspannungsanschluß B+ und einen zweiten Gleichspannungsanschluß B-, die mit einem Gleichstromnetz 100 verbunden sind. Die Gleichrichteranordnung 10 kann darüber hinaus noch Kondensatoren zur Glättung der gleichgerichteten Spannung an den Gleichspannungsausgängen B+, B- umfassen, wobei solche Kondensatoren jedoch nicht dargestellt sind. Das Gleichstromnetz 100 umfasst eine Verbindung 90 zwischen dem ersten Gleichspannungsanschluß B+ und dem Gleichstromnetz 100. Die Verbindung 90 stellt eine Verbindung zu dem übrigen Gleichstromnetz 100 her. Das Gleichstromnetz 100 umfasst darüber hinaus eine Batterie 60 und in der Regel wenigstens einen ersten Verbraucher 40 und einen zweiten Verbraucher 50, die mittels dargestellten, jedoch nicht näher bezeichneten Schaltern mit dem Gleichstromnetz 100 verbindbar bzw. einschaltbar sind bzw. von ihm trennbar bzw. ausschaltbar sind.

Das Gleichstromnetz 100 ist erfindungsgemäß insbesondere als Bordnetz eines Fahrzeugs vorgesehen. Daher wird im Folgenden gleichermaßen von Bordnetz 100 als auch von Gleichstromnetz 100 gesprochen.

In Figur 2 ist eine Gleichrichteranordnung 10 gemäß der Figur 1 in einer vergrößerten Darstellung dargestellt. Die Gleichrichteranordnung 10 umfasst eine Anzahl von Dioden, weshalb die Gleichrichteranordnung 10 erfindungsgemäß auch als Diodenanordnung 10 bezeichnet wird. Die Diodenanordnung 10 umfasst eine erste Diode 2, eine zweite Diode 3, eine dritte Diode 4, eine vierte Diode 5, eine fünfte Diode 6 und eine sechste Diode 7. Die Dioden 2-7 sind erfindungsgemäß als Zenerdioden vorgesehen und bilden eine Gleichrichterbrücke herkömmlicher Bauart. In Figur 2 sind die Wechselstromanschlüsse auf der linken Seite der Diodenanordnung 10 dargestellt. Diese umfassen einen ersten Wechselspannungsanschluß U, einen zweiten Wechselspannungsanschluß V und einen dritten Wechselspannungsanschluß W. Auf der rechten Seite der Gleichrichteranordnung 10 sind in Figur 2 die Gleichstromanschlüsse B+, B- der Diodenanordnung 10 dargestellt.

Im Normalbetrieb, d.h. zur Gleichrichtung der Phasenwechselspannung, die an den Wechselspannungseingängen bzw. Wechselspannungsanschlüssen U, V, W anliegt, werden die Dioden 2-7 in Vorwärtsrichtung betrieben und haben einen Stromfluß von der Anode zur Kathode. Dies ist in Figur 2 durch die mittels kleineren Strichen gestrichelte Linie 1 dargestellt. Bei der Gleichrichtung einer positiven Halbwelle der Wechselspannung zwischen den Wechselspannungsanschlüssen U und V führt der Strompfad beispielsweise ausgehend von dem ersten Wechselspannunganschluß U zunächst zur ersten Diode 2, die in Vorwärtsrichtung aktiviert ist; der Strompfad führt weiter über den ersten Gleichstromanschluß B+, das Bordnetz 100 zum zweiten Gleichstromanschluß B- und von dort über die fünfte Diode 6 zum zweiten Wechselspannungsanschluß V. Sowohl die erste Diode 2 als auch die fünfte Diode 6 werden dabei in Vorwärtsrichtung betrieben.

Im Loaddump-Fall steigt die Phasenwechselspannung an und wird für die zwischen den Phasenanschlüssen bzw. Wechselstromanschlüssen U, V, W liegende Diodenkombination begrenzt. Dabei werden die Dioden 2-7 zumindest teilweise in ihrem Zenerdurchbruch betrieben, d.h. in Rückwärtsrichtung. Die Begrenzungsspannung wird hierbei hauptsächlich durch die Zenerspannung derjenigen Dioden 2-7 bestimmt, die in Rückwärtsrichtung betrieben werden. Die Phasenbegrenzungsspannung ergibt sich aus der Summe einer Diodenvorwärtsspannung und einer Diodenzenerspannung. In einem solchen Loaddump-Fall wird ein Strompfad benutzt, der in Figur 2 mittels der mit längeren Strichen gestrichelten Strompfaddarstellung 13 dargestellt ist. Hierbei führt der Strompfad 13 vom ersten Wechselspannungsanschluß U sowohl über die erste Diode 2 (in Vorwärtsrichtung) zur zweiten Diode 3 (in Rückwärtsrichtung betrieben) zum zweiten Wechselspannungsanschluß V, als auch über die vierte Diode 5 (in Rückwärtsrichtung betrieben) und die fünfte Diode 6 (in Vorwärtsrichtung betrieben) ebenfalls zum zweiten Wechselspannungsanschluß V. In diesem Fall liegt an den Gleichspannungsanschlüssen B+, B- die Bordnetzbegrenzungsspannung an, die sich aus der Differenz zwischen der Diodenzenerspannung und der Diodenvorwärtsspannung ergibt. Da die Diodenzenerspannung wesentlich größer als die Diodenvorwärtsspannung ist, wird letztlich die an den Gleichstromanschlüssen B+, B-anliegende Loaddump-Begrenzungsspannung hauptsächlich durch die Durchbruchsspannung, d.h. die Zenerspannung der Zenerdioden 2-7 bestimmt. Diese ergibt sich wiederum einerseits aus der Herstelltoleranz der Zenerspannung der Zenerdioden 2-7, die bei genormten Bedingungen bei niedrigem Strom und Raumtemperatur angegeben wird, und andererseits weiteren Anteilen, die von der Betriebssituation der Zenerdioden bestimmt sind, beispielsweise vom Rückwärtsstrom, der Sperrschichttemperatur der Diode und dergleichen. Insgesamt ergibt sich dadurch ein Toleranzfeld der Loaddump-Begrenzungsspannung, das von Herstelltoleranzen und Betriebsbedingungen (Ströme, Sperrschichttemperaturen) der Dioden bestimmt ist. Die Sperrschichttemperatur wiederum ist abhängig von der äußeren Betriebstemperatur, der inneren Verlustleistung und der thermischen Kühlung der Dioden in jeder Applikation. Damit die Gleichrichter-Zenerdioden zur wirksamen Loaddump-Spannungsbegrenzung verwendet werden können, müssen sie so ausgelegt sein, dass sichergestellt ist, dass ihre Zenerspannung in allen Betriebsbereichen bestimmte durch die Applikation oder durch sonstige Anforderungen, wie beispielsweise Normen und Sicherheitsvorschriften, vorgegebene Toleranzbereiche nicht über- bzw. unterschreiten.

Erfindungsgemäß wird die Verwendung von Gleichrichter-Zenerdioden 2-7 auch für Bordnetze 100 möglich, die eine deutlich höhere Sollspannung aufweisen als beispielsweise die 14-V-Sollspannung von herkömmlichen Bordnetzen 100. Hierzu ist insbesondere vorgesehen, die Durchbruchsspannungstoleranzen zu verringern. Andererseits ist jedoch auch vorgesehen, dass einerseits bei extremen Bedingungen die Zenerdiode auch bei einem normalen Betrieb (d.h. kein Loaddump-Fall) des Generators 20 und des Gleichrichters 10 zeitweise im Zenerdurchbruch betrieben wird und andererseits ist es erfindungsgemäß zulässig, dass bei einem vollständigen Loaddump, beispielsweise durch Unterbrechung der Verbindung 90, die maximale Loaddump-Spannung am Generatorausgang B+, B- auf einen Wert ansteigen darf, der höher als die im gesamten Bordnetz 100 zulässige Spannung ist. In diesem Fall sind alle Komponenten im Generator auf diese erhöhte Spannungsbelastung auszulegen, während alle anderen Systeme, wie beispielsweise die Verbraucher 40, 50 und die Batterie 60, diese Spannung nicht eingeprägt bekommen, da sie durch den Abfall der Generatorleitung abgekoppelt sind. Ein Loaddump, bei dem neben der Generatorelektronik noch mindestens ein weiteres System angeschlossen bleibt, führt nur zu einer geringeren Loaddump-Belastung der Dioden, was bei deren Auslegung zur Einhaltung der Spannungsobergrenze im Bordnetz 100 als reduzierter Loaddump-Fall Berücksichtigung findet, d.h. es wird ein Loaddump-Fall betrachtet, der ein geringeres Ausmaß als ein vollständiger Loaddump aufweist. In diesem Fall übersteigt die Gleichspannung an B+ und B- die maximal zulässige Spannung im Bordnetz 100 erfindungsgemäß nicht, weil lediglich ein Loaddump von begrenztem Ausmaß vorliegt.

Die andere Maßnahme, nämlich einen zeitweiligen Betrieb der Dioden im Zenerdurchbruch auch beim normalen Betrieb des Generators zu erlauben, ist beispielsweise dann der Fall, wenn eine Kombination aus niedriger Diodentemperatur, einer nominalen Zenerspannung einer Diode am unteren Rand des Zenerspannungstoleranzbereichs und eine Ausgangsspannung des Generators am oberen Rand des zulässigen Bordnetzbetriebsspannungsbereichs vorliegt.

Erfindungsgemäß ist daher ein Toleranzbereich für die Zenerspannung der Zenerdioden 2-7 vorgesehen, der in Figur 3 mit dem Bezugszeichen 15 versehen ist. Mit dem Bezugszeichen 8 ist eine untere Grenze der Zenerspannung des Toleranzbereichs 15 angegeben und mit dem Bezugszeichen 9 ist eine obere Grenze der Zenerspannung des Toleranzbereichs 15 angegeben. Weiterhin ist ein Toleranzbereich 16 in Figur 3 dargestellt, der die möglichen Werte angibt, die an den Gleichstromausgängen B+, B- des Gleichrichters 10 zur Aufprägung auf das Gleichstromnetz 100 anliegen darf. Hierbei ist eine obere Gleichspannung 12 des Gleichspannungsbereichs 16 und eine untere Gleichspannung 11 des Gleichspannungsbereichs 16 angegeben, wobei die obere Gleichspannung 12 die im Bordnetz maximal zulässige Spannung während eines Loaddumps darstellt, während die untere Gleichspannung 11 die maximal auftretende Spannung im Normalbetrieb des Generators ist. Die obere Grenze 9 der Zenerspannung darf die obere vorgegebene Gleichspannung 12 übersteigen, wenn ein Loaddump ein bestimmtes Ausmaß übersteigt, d.h. beispielsweise im Fall eines "100%-Loaddump" bei Unterbrechung der Verbindung 90.

Beispielhaft ist in Figur 3 noch ein Spannungsmaßstab angegeben, wobei der unteren Grenze 8 der Zenerspannung eine Spannung von 42V, der unteren vorgegebenen Gleichspannung 11 eine Spannung von 48V, der oberen vorgegebenen Gleichspannung 12 eine Spannung von 58V und der oberen Grenze 9 der Zenerspannung eine Spannung von 58V oder geringfügig darüber zugewiesen wird. Dies ist jedoch nur als eine beispielhafte Ausführungsform zu verstehen.

Vorteilhaft ist erfindungsgemäß, dass die Herstelltoleranz der Zenerspannung im Vergleich zu Zenerdioden, die bei 14-V-Bordnetzen Verwendung finden, weitgehend unverändert bleibt. Die Überhöhung der Zenerspannung, bedingt durch den Loaddump-Rückwärtsstrom und die Übertemperatur der Diode nimmt im Vergleich zu im 14V-Fall verwendeten Zenerdioden nur unwesentlich zu. Die maximale Zenerspannung bei realistischen und für die Bordnetzkomponenten 40, 50, 60 relevanten Loaddump-Fällen überschreitet die obere vorgegebene Gleichspannung 12 nicht. Die unteren Toleranzbereiche des Zenerspannungsbereichs 15 überlappen mit den oberen Bereichen der zulässigen Bordnetzspannung im Normalbetrieb. In diesem Fall wird die Zenerdiode zeitweise im Zenerdurchbruch betrieben. Dabei wird eine zusätzliche Verlustleistung in der Diode erzeugt. Dies führt zu einer Erwärmung der Diode und aufgrund des positiven Temperaturkoeffizienten der Zenerspannung und der Strombelastung in der Diode steigt die Zenerspannung weiter an und erlaubt dadurch eine Erhöhung der Bordnetzspannung auch bis zu dem maximal geforderten Wert von der unteren vorgegebenen Gleichspannung 11. Der Wirkungsgrad des Generators 20 wird dabei nur unwesentlich beeinträchtigt und die Diode trotz der zusätzlichen thermischen Belastung in ihrer Langzeitzuverlässigkeit aufgrund ihrer hohen Robustheit nicht eingeschränkt.

## Patentansprüche

1. Generator (20) mit einer Diodenanordnung (10) mit Zenerdioden (2-7), wobei die Diodenanordnung (10) Wechselspannungsanschlüsse (U, V, W) und Gleichspannungsanschlüsse (B+, B-) aufweist, wobei die Zenerdioden (2-7) zur Gleichrichtung einer an den Wechselspannungsanschlüssen (U, V, W) des Generators anliegenden Wechselspannung in Durchlassrichtung eingerichtet sind (Vorwärtsbetrieb), wobei für die Zenerspannung der Zenerdioden (2-7) in Rückwärtsrichtung ein Toleranzbereich mit einer unteren (minimale) Grenze (8) vorgesehen ist, wobei der Generator (20) zur Erzeugung einer Gleichspannung für ein Gleichspannungsnetz vorgesehen ist, wobei eine untere vorgegebene Gleichspannung (11) vorgesehen ist, wobei die untere vorgegebene Gleichspannung die maximal auftretende Spannung im Normalbetrieb des Generators ist, **dadurch gekennzeichnet, dass** die untere Grenze (8) des Toleranzbereichs der Zenerspannung kleiner als die untere vorgegebene Gleichspannung (11) ist und dass ein Teil der Zenerdioden (2-7) im Zenerbetrieb (Rückwärtsbetrieb) betrieben werden, sofern im Normalbetrieb des Generators an den Gleichspannungsanschlüssen (B+, B-) eine im Wesentlichen die untere Grenze (8) des Toleranzbereichs der Zenerspannung übersteigende Gleichspannung anliegt.

2. Generator (20) nach Anspruch 1, **dadurch gekennzeichnet, dass** die untere Grenze (8) des Toleranzbereichs der Zenerspannung bei etwa 42 V vorgesehen ist und dass die untere vorgegebene Gleichspannung (11) bei etwa 48 V vorgesehen ist.

## Claims

1. Generator (20) comprising a diode arrangement (10) comprising zener diodes (2-7), wherein the diode arrangement (10) has AC voltage terminals (U, V, W) and DC voltage terminals (B+, B-), wherein the zener diodes (2-7) are configured for rectifying an AC voltage present at the AC voltage terminals (U, V, W) of the generator in the forward direction (forward operation), wherein a tolerance range having a lower (minimum) limit (8) is provided for the zener voltage of the zener diodes (2-7) in the reverse direction, wherein the generator (20) is provided for generating a DC voltage for a DC voltage network, wherein a lower predefined DC voltage (11) is provided, wherein the lower predefined DC voltage is the maximum voltage occurring during normal operation of the generator, **characterized in that** the lower limit (8) of the tolerance range of the zener voltage is less than the lower predefined DC voltage (11), and **in that** a portion of the zener diodes (2-7) are operated in zener operation (reverse operation) provided that a DC voltage substantially exceeding the lower limit (8) of the tolerance range of the zener voltage is present at the DC voltage terminals (B+, B-) during normal operation of the generator.

2. Generator (20) according to Claim 1, **characterized in that** the lower limit (8) of the tolerance range of the zener voltage is provided at approximately 42 V, and **in that** the lower predefined DC voltage (11) is provided at approximately 48 V.

## Revendications

1. Générateur (20) comprenant un arrangement de diodes (10) avec des diodes zener (2-7), l'arrangement de diodes (10) possédant des bornes de tension alternative (U, V, W) et des bornes de tension continue (B+, B-), les diodes zener (2-7) étant conçues pour redresser dans le sens passant une tension alternative appliquée aux bornes à tension alternative (U, V, W) du générateur (mode direct), une plage de tolérances ayant une limite (minimale) inférieure (8) étant prévue pour la tension de zener des diodes zener (2-7) dans le sens inverse, le générateur (20) étant destiné à générer une tension continue pour un réseau de tension continue, une tension continue (11) prédéfinie inférieure étant prévue, la tension continue prédéfinie inférieure étant la tension maximale produite par le générateur en fonctionnement normal, **caractérisé en ce que** la limite inférieure (8) de la plage de tolérances de la tension de zener est inférieure à la tension continue (11) prédéfinie inférieure et **en ce qu'**une partie des diodes zener (2-7) sont utilisées en mode zener (mode inverse), sous réserve qu'en fonctionnement normal du générateur, une tension continue qui dépasse sensiblement la limite inférieure (8) de la plage de tolérances de la tension de zener est présente aux bornes à tension continue (B+, B-).

2. Générateur (20) selon la revendication 1, **caractérisé en ce que** la limite inférieure (8) de la plage de tolérances de la tension de zener est définie à environ 42 V et **en ce que** la tension continue (11) prédéfinie inférieure se situe à environ 48 V.
